# EUROPEAN PATENT APPLICATION

(11) **EP 3 388 236 A1**
(43) Date of publication of application: **17.10.2018**
(21) Application number: 18176539.7
(22) Date of filing: 16.06.2011
(51) Int. Cl.: B32B 27/08, B32B 27/32, B32B 27/36, B65D 77/20, B32B 7/00, B32B 7/02, B32B 7/04, B32B 7/06, B32B 7/12, B32B 27/00, B32B 1/00, B32B 1/02, B32B 3/00, B32B 3/06, B32B 3/26

(54) **A SHEET, A METHOD OF MAKING AND USING A SHEET AS A LID FOR PACKAGES**

(30) Priority: 22.06.2010 DK PA201000545; 09.02.2011 DK PA201100083
(62) Divisional of application: 11797635.7
(71) Applicant: Danapak Flexibles A/S, 4200 Slagelse (DK)
(72) Inventor: JOHANSEN, Peter, 4200 Slagelse (DK)
(74) Representative: AWA Denmark A/S

(57) **Abstract**

A sheet (2) is made by the method of the invention, in particular for use for the punching of lids for packages, in that a PE layer (5a) and an additional layer PP (5b) are applied to a sheet layer (4) of polyester (PET) by coextrusion to form the finished sheet laminate (2).

This ensures that the sheet (2) is transparent throughout, just as it provides the possibility of controlled delamination by separation of the PE layer (5a) from the PP layer (5b), when the sheet (2) is pulled off a package (1).

## Description

### The prior art

The invention relates to a method of making a punched sheet lid according to the introductory portion of claim 1.

WO 98/25760 A1 discloses a sheet laminate, where the sheet is made by laminating two sheets containing several separate layers together. The sheet laminate may be used as a lid on containers, said sheet being welded to the edge of the container.

Owing to the selection of material and the laminated structure with many layers in the two sheets in the laminate, the known type of sheet will not possess a sufficient rigidity to be suitable for the punching for lids before they are applied to the container, as a lid of this type will typically curl after the punching.

Sheets are also known in various materials and are used as a lid on packages, e.g. cups and bottles, for the packaging of especially milk products, salads, pates, etc. The lid may be made of Al sheet, to which a layer of welding lacquer has been applied in order for it to be able to adhere to the package.

This type of lid, however, is not transparent, which is a widespread wish among consumers.

When using a PET sheet which is transparent, a layer of welding lacquer has to be applied, which, since it is milky, is applied only to the rim where the welding to the lid is to take place in order not to destroy the transparency.

The drawback of this application of welding lacquer is that it has to be applied precisely, either to the punched sheet lids or in an assembled form to a web of sheet in connection with the actual closure of the package.

This adds to the costs, and, in any event, the welding lacquer leaves a visible rim along the lid edge, which is an aesthetic drawback.

GB 2370808 A and EP 2108507 A1 disclose lid sheets comprising a PP layer and a pressure sensitive adhesive (PSA) for manufacture of resealable packages.

### The object of the invention

It is the object of the invention to remedy these drawbacks and deficiencies of the use of a PET sheet in connection with PP packages, and this is achieved according to the invention by a method according to claim 1.

The sheet made by the method is a transparent polyester sheet (PET), where an additional layer is applied on top of the transparent polyester sheet (PET) in the form of a coextruded layer of polyolefin layer and a PP polymer layer to form the sheet, said polyolefin layer being disposed between the transparent polyester sheet (PET) and the PP polymer layer.

First and foremost, this ensures that complete transparency is provided, even over the weld. Further, a frequently considerable waste of material is avoided, since there are no special requirements with respect to the position of the weldable coating, as this is present everywhere on the sheet. Finally, the coating of the transparent PET sheet ensures that the punched lid possesses a suitable rigidity, which prevents the lid from curling, thereby making it possible to punch lids.

Further, it is very advantageously ensured that the expensive printing processes, where a layer of welding lacquer has to be applied, are avoided.

All these factors contribute to simplifying and thereby reducing the costs of the sheet, which, as mentioned, has been given complete transparency.

Finally, the extrusion of the welding layer means that this lid sheet is stronger than a corresponding one provided with welding lacquer, thereby allowing the thickness of the PET sheet to be reduced correspondingly, thus achieving a saving of weight and material of about 15%.

It is preferred that the polyolefin layer is a polyethylene (PE) layer, preferably in the form of a homopolymer or a copolymer of PE, which contains polypropylene (PP) in one embodiment, and that the coextrusion of the polyolefin layer/PE layer and the PP polymer layer on top of the transparent polyester sheet (PET) takes place such that the polyolefin layer, such as the PE layer, is disposed between the transparent polyester sheet (PET) and the PP polymer layer.

When a primer is applied to the transparent polyester sheet (PET) prior to the application of the coextruded polyolefin layers, including PE layers, and PP layers, an enhanced adhesion is achieved between the PET layer and the PE layer. The enhanced adhesion between the PET layer and the PE layer allows the delamination to be controlled, said delamination taking place between the polyolefin layer or the PE layer and the PP layer.

When the PP layer is disposed against the PP package, safe fusion and thereby tightly fitting assembly of lid and container are achieved.

When using a PET sheet with a thickness of min. 23 µm and the applied coextruded layer with an overall weight of min. 8 g/m², corresponding to a thickness of min. 9 µm, a relatively inexpensive and material-saving lid sheet is achieved.

The sheet may be punched for lids, and finally it is expedient to use the lid sheet for welding to containers and the like, in that the sheet is punched to the final shape of the lid sheet prior to the welding to the container, said sheet lid being welded to the container with the PP layer, which constitutes a welding layer facing toward the container, and that the lid, by a subsequent separation from the package by a pull in the sheet, causes the PE layer to remain on the PET sheet and the PP layer to remain on the PP cup, as the PE and PP layers delaminate. This ensures that when the sheet is pulled off the package, a totally precise delamination of the PE layer and the PP layer will take place, thereby ensuring that the sheet is pulled off without the lid being torn to pieces.

### The drawing

An example of a method of making a lid sheet according to the invention and its use will be described more fully below with reference to the drawing, in which
- fig. 1: shows a cup with a lid sheet prior to the welding-together, and
- fig. 2: shows a sectional view of the cup and the lid sheet after pulling-off, opening, seen in the direction II - II in fig. 1.

### Description of an exemplary embodiment

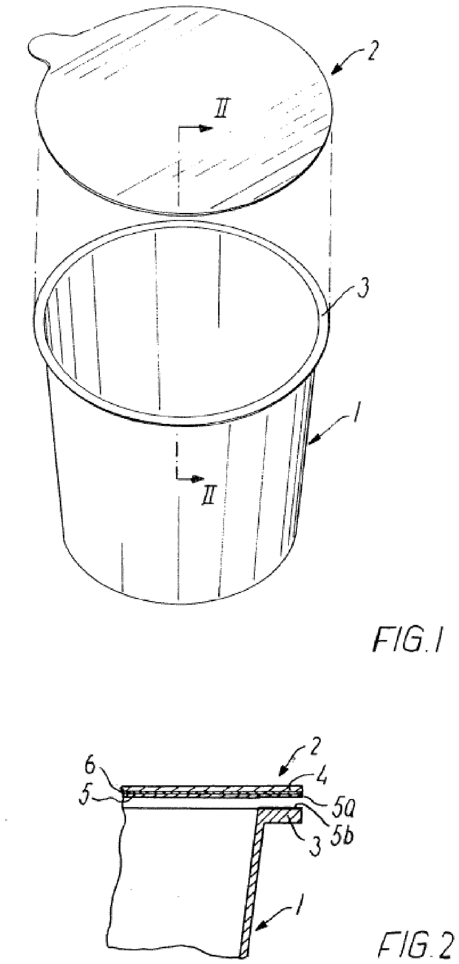

The example shown in fig. 1 consists of a cup 1 which is made of PP.

The cup may be of the type which is known as a package for yoghurt and similar milk products. But it may also be a cup for salad foods or a bottle for milk or soft drinks.

In the example shown, the package 1 is provided with an upper rim 3, which is e.g. plane on the upper side.

When this cup 1 has been filled with its contents, it has to be closed with a lid 2. This lid 2 has preferably been punched in advance and is thus adapted to the opening of the cup 1.

This lid 2, which consists of a sheet laminate, is shown in a sectional view in fig. 2. It comprises a base sheet 4 of PET, which is transparent, and may have a thickness of between 23 and 50 µm. The thickness is adapted to the need for strength, barrier properties, size, etc.

On this base sheet 4, a layer PE, which is designated 5a, and a layer of PP, which is designated 5b, are provided by coextrusion. The latter constitutes a welding layer which is intended to be welded together with the rim portion 3 of the PP cup. The PE layer 5a may be a homopolymer or a copolymer of PE - a suitable PE copolymer contains polypropylene - and will just be called the PE layer. The PP layer 5b may likewise be a homopolymer or a copolymer of PP - a suitable copolymer may contain polyethylene - and will be called the PP layer.

These two layers 5a and 5b preferably have an overall amount of between 8 and 20 g/m², or corresponding to about 9 - 22 µm. The PE layer preferably has a thickness of 5 - 15 g/m², corresponding to about 5.5 - 17 µm, and the PP layer preferably has a thickness of 4 - 6 g/m², or corresponding to about 4.3 - 6.5 µm.

In a preferred embodiment, the base sheet 4 of polyester PET has applied thereto a primer 6, which ensures enhanced adhesion between the polyester (PET) in the base sheet 4 and the PE layer 5a in the coextruded layer 5, which is applied on top of the base sheet 4. The preferred primer is acrylic-based and contains polyethyleneimine (PEI), where especially PEI is responsible for the enhanced adhesion between the layers of PET and PE. The limit value of the adhesion is not quite clear as yet, but it is expected to be within 2 - 5 N for a 15 mm wide test strip.

An alternative embodiment of making this sheet 2 comprises extrusion of a base sheet 4 and, by coextrusion, the creation of a first layer 5a and an additional layer 5b, said layers being put together to form the lid sheet 2.

It is preferred that the lid sheet is calendered immediately after the application of the coating to the transparent PET sheet.

These methods provide the advantage that the sheet laminate 2 will be transparent and will be weldable in its full extent. Thereby, any lid shape and dimension may be punched from a roll of sheet, as the lid may be adapted to the size and shape of the package.

In connection with the filling of packages, e.g. cups, in a filling machine, the lid is applied subsequently by application and welding to the rim portion 3.

When the package has thus been filled and closed with a lid 2, the user will be able to pull off the lid by pulling the lid flap, as indicated in fig. 2.

Hereby, the two layers 5a and 5b, PE and PP, respectively, will be separated, delaminated, in such a manner that the pullin-off, the opening, is controlled and totally precise.

Since the two layers 5a and 5b are relatively stiff, the dimensions of the base sheet 4 may be reduced, thus saving weight as well as consumption of material. Moreover, the enhanced rigidity of the lid sheet means that the punched lids do not curl after the punching.

Optionally, an additional layer with print/colour may be applied in a generally known manner, either before or after the punching of the lids, just as an additional barrier layer may optionally be applied to the lid sheet, e.g. prior to the coating and/or punching.

The following are embodiments 1-15 according to the present invention. The reference numbers in parenthesis are to be read as non-binding.
Embodiment 1. A method of making a sheet (2) in particular for packages, such as cups of polypropylene (PP) said sheet comprising a transparent polyester sheet (PET) (4),
   **characterized** in that
   - the sheet (2) is made by coating the transparent polyester sheet (4), and an additional layer (5) is applied on top of or onto the transparent polyester sheet (PET) (4) by coextruding a polyolefin layer (5a) and a PP polymer layer (5b) to form the sheet (2),.
Embodiment 2. A method according to embodiment 1, **characterized** in that the polyolefin layer (5a) is a PE layer, preferably in the form of a homopolymer or a copolymer of PE.
Embodiment 3. A method according to embodiment 2, **characterized** in that the polyolefin layer is a copolymer of polyethylene (PE), which contains polypropylene (PP).
Embodiment 4. A method according to embodiment 1, 2 or 3, **characte rized** in that the coextrusion of the polyolefin layer/PE layer (5a) and the PP polymer layer (5b) on top of or onto the transparent polyester sheet (PET) (4) takes place such that the polyolefin layer (5a), such as the PE layer, is disposed between the transparent polyester sheet (PET) (4) and the PP polymer layer (5b).
Embodiment 5. A method according to any one of embodiments 1 - 4, **ch aracterized** in that a primer layer is applied to the transparent polyester sheet (PET) prior to the application of the coextruded polyolefin layer (5a) and PP layer (5b).
Embodiment 6. A method according to any one of embodiments 1 - 5, **ch aracterized** in that the punched lid sheet (2) is welded to the package (1), said PP layer (5b) adhering to the PP package (1).
Embodiment 7. A method according to any one of embodiments 1 - 6, **ch aracterized** in that the PET sheet (4) is given a thickness of between 23 and 50 µm, and that the coextruded layer (5) is given an amount of between 8 and 20 g/m², corresponding to a thickness of between 9 and 22 µm.
Embodiment 8. A method according to any one of embodiments 1 - 7, **ch aracterized** in that the PET sheet (4) is extruded immediately before the coating with the coextruded layer (5) with a polyolefin layer (5a) and PP polymer layer (5b).
Embodiment 9. A sheet, comprising a transparent polyester sheet (PET) (4), **characterized** in that the transparent polyester sheet (4) has applied thereto an additional layer (5) on top of or onto the transparent polyester sheet (PET) (4) in the form of a coextruded layer of polyolefin layer (5a) and a PP polymer layer (5b) to form the sheet (2), said polyolefin layer (5a) being disposed between the transparent polyester sheet (PET) (4) and the PP polymer layer (5b).
Embodiment 10. A sheet according to embodiment 9, **characterized** in that the polyolefin layer (5a) is a polyethylene (PE) layer, preferably in the form of a homopolymer or a copolymer of PE.
Embodiment 11. A sheet according to embodiment 10, **characterize d** in that the polyolefin layer is a copolymer of polyethylene (PE), which contains polypropylene (PP).
Embodiment 12. A sheet according to any one of embodiments 9 - 11, **cha racterized** in that a primer layer (6) is present between the PET sheet (4) and the polyolefin layer (5a).
Embodiment 13. A sheet according to any one of embodiments 9 - 12, **ch aracterized** in that the PET sheet (4) has a thickness of between 23 and 50 µm, and that the coextruded layer (5) has a thickness of between 8 and 20 g/m², corresponding to a thickness of between 9 and 22 µm.
Embodiment 14. A sheet according to any one of embodiments 9 - 13, **ch aracterized** in that the sheet is punched to a lid (2) for a package (1).
Embodiment 15. Use of the sheet according to embodiments 9 - 14 to be welded as a lid to a container (1) of PP, **characterized** in that the sheet (2) is punched to the final shape of the sheet lid prior to the welding to the container (1), said sheet layer being welded to the container with the PP layer (5b), which constitutes a welding layer, facing toward the container (1), the lid, at a subsequent separation from the package (1) by a pull in the sheet (2), causes the PE layer (5a) to remain on the PET sheet (4) and the PP layer (5b) to remain on the PP cup (3), as the PE and PP layers (5a and 5b) delaminate.

## Claims

1. A method of making a punched sheet lid (2) for packages in the form of cups of polypropylene, wherein said sheet is comprising a transparent polyester sheet (4), wherein the method of making a punched sheet lid is **characterized in that**,
- the said sheet is made by coating the transparent polyester sheet (4) with a coextruded additional layer (5) by coextruding a polyolefin layer (5a) and a polypropylene layer (5b) onto the said polyester sheet (4), and wherein the coextrusion of the polyolefin layer (5a) and the polypropylene layer (5b) onto the said polyester sheet (4) takes place such that the polyolefin layer (5a) is disposed between the polyester sheet (4) and the polypropylene layer (5b),
- the said method comprises the step of punching the sheet lid (2).

2. A method according to claim 1, **characterized in that** the polyolefin layer (5a) is a polyethylene layer, preferably in the form of a homopolymer or a copolymer of polyethylene.

3. A method according to claim 2, **characterized in that** the polyolefin layer is a copolymer of ethylene, which contains polypropylene units.

4. A method according to any one of claims 1 - 3, **characterized in that** a primer layer is applied to the said transparent polyester sheet prior to the application of the coextruded polyolefin layer (5a) and polypropylene layer (5b).

5. A method according to any one of claims 1 - 4, **characterized in that** the punched sheet lid (2) is welded to a polypropylene package (1), said polypropylene layer (5b) adhering to the polypropylene package (1).

6. A method according to any one of claims 1 - 5, **characterized in that** the said polyester sheet (4) is given a thickness of between 23 and 50 µm, and that the coextruded layer (5) is given an amount of between 8 and 20 g/m², corresponding to a thickness of between 9 and 22 µm.

7. A method according to any one of claims 1 - 6, **characterized in that** the punched sheet lid (2) is suitable for being welded to a polypropylene package (1), said polypropylene layer (5b) adhering to the polypropylene package (1).

8. A method according to any one of claims 1 - 7, **characterized in that** the sheet lid (2) is punched in advance of closing a cup and is thus adapted in size and shape to the opening of the cup.

9. A method according to any one of claims 1 - 8, **characterized in that** the said method comprises the step of punching the sheet lid (2) to the final shape of the sheet lid (2) so that the said polypropylene layer (5b) can be welded to the said polypropylene cup, said polypropylene layer adhering to the said polypropylene cup.

10. A punched sheet lid obtained by the method according to any one of claims 1 - 9.

11. A method of adhering a punched sheet lid to a polypropylene cup, comprising the steps of:
- providing a punched sheet lid made according to any one of claims 1 - 9 or a punched sheet lid according to claim 10,
- providing a polypropylene cup, and
- welding the polypropylene layer (5b) to the said polypropylene cup, so that said polypropylene layer adheres to the said polypropylene cup.

12. Use of a punched sheet lid made by the method according to any one of claims 1 - 9 as a lid of a container (1) of polypropylene, the sheet lid (2) being punched to the final shape of the sheet lid (2) prior to the welding to the container (1), said sheet lid (2) being welded to the container (1) with the polypropylene layer (5b), which constitutes a welding layer, facing toward the container (1), the lid, at a subsequent separation from the container (1) by a pull in the sheet lid (2), causing the polyolefin layer (5a) to remain on the polyester sheet (4) and the polypropylene layer (5b) to remain on the polypropylene container (3), as the polyolefin and polypropylene layers (5a and 5b) delaminate.
